# FASCICULE DE BREVET EUROPEEN

(11) **EP 4 469 409 B1**
(45) Date de publication et mention de la délivrance du brevet: **17.09.2025**
(21) Numéro de dépôt: 23706403.5
(22) Date de dépôt: 24.01.2023
(51) Int. Cl.: C03B 5/03

(54) **FOUR ÉLECTRIQUE VERRIER, PROCÉDÉS DE FUSION ET DE FABRICATION DE VERRE AU MOYEN DUDIT FOUR**
ELEKTRISCHER GLASOFEN, VERFAHREN ZUM SCHMELZEN UND HERSTELLEN VON GLAS MIT DIESEM OFEN
ELECTRIC GLASS FURNACE, METHODS FOR THE MELTING AND MANUFACTURE OF GLASS BY MEANS OF SAID FURNACE

(30) Priorité: 25.01.2022 FR 2200637
(43) Date de publication de la demande: 04.12.2024
(73) Titulaire: Saint-Gobain Isover, 92400 Courbevoie (FR)
(72) Inventeur: ZIMMERMANN, Jean-François, 92400 COURBEVOIE (FR); GERVAIS, Joël, 92400 COURBEVOIE (FR); DE DIANOUS, Philippe, 92400 COURBEVOIE (FR)
(74) Mandataire: Saint-Gobain Recherche
(86) Numéro de dépôt international: PCT/FR2023/050098
(87) Numéro de publication internationale: WO 2023/144489

(56) Documents cités:
- DE-A1- 2 347 819
- US-A- 3 421 876
- US-A- 5 613 994
- US-A1- 2017 158 541

## Description

### Technique antérieure

La présente invention appartient au domaine général de la production de verre. Elle concerne plus particulièrement un four électrique verrier configuré pour permettre la fusion de matières premières. Elle concerne également un procédé de fusion de matières premières mis en œuvre au moyen de ce four électrique verrier, ainsi qu'un procédé de fabrication de verre comportant une étape de fusion de matières premières conforme audit procédé de fusion.

On connaît de l'état de la technique différents exemples de conception de fours pour la fabrication de verre qui dépendent notamment du produit à fabriquer, c'est-à-dire de la composition chimique du verre et de sa mise en forme finale (laine de verre, laine de roche, verre creux ou bien encore verre plat).

Dans la présente description, on comprend par « matières premières » tous les matériaux, matières vitrifiables, minerais naturels ou produits synthétisés, matériaux issus de recyclage du type calcin etc.., qui peuvent entrer dans la composition venant alimenter un four verrier.

De même, on comprend par « verre » le verre au sens large, c'est-à-dire englobant tout matériau à matrice vitreuse, vitrocéramique ou céramique.

En outre, le terme de "fabrication" comprend l'étape de fusion indispensable des matières premières et, le cas échéant, toutes les étapes ultérieures/complémentaires visant à affiner/conditionner le verre en fusion en vue de sa mise en forme définitive, notamment sous forme de verre plat (vitrages), de verre creux (flacons, bouteilles), de verre sous forme de laine minérale (en particulier laine de roche ou laine de verre) utilisée pour ses propriétés d'isolation thermique ou phonique, ou même éventuellement de verre sous forme de fils dits textile utilisés dans le renforcement.

Plus particulièrement, il est connu d'utiliser un four électrique verrier pour réaliser la fusion de matières premières, de sorte à obtenir un bain de matières vitrifiables, encore couramment appelé « mélange vitrifiable » ou bien « composition ».

Le mélange vitrifiable provient typiquement de matières premières comportant par exemple un mélange de sable, de calcaire (carbonate de calcium), de carbonate de soude, de dolomie pour la fabrication d'un verre sodocalcique (le verre le plus utilisé pour la fabrication de verre plat) ou de trioxyde de bore pour la fabrication de verre borosilicate, et auxquelles est avantageusement ajouté du calcin (encore appelé groisil) constitué de débris de verre afin notamment de favoriser la fusion.

Ces matières premières sont transformées en une masse liquide formant un bain de matière vitrifiable fondue dans lequel doivent se dissoudre même les particules les moins miscibles, c'est-à-dire les plus riches en dioxyde de silicium ou silice (SiO2) et pauvres en oxyde de sodium (Na2O).

Ledit four électrique verrier comporte, de manière conventionnelle, une cuve en matériau réfractaire destinée à contenir le bain de matière fondue, l'espace au-dessus de la cuve étant fermé par une voûte. Les matières premières sont introduites dans la cuve via son dessus, au moyen d'un dispositif mécanique apte à réaliser cette introduction sur tout ou partie de la surface du bain de matière fondue. Cette surface constitue un écran thermique permettant de limiter la température au-dessus du bain. Ce type de four est encore dit « à voûte froide » (respectivement « voûte semi-froide ») dans le cas où toute la surface du bain (respectivement seule une partie de la surface du bain) est destinée à être recouverte de matières premières.

Le principe de chauffage d'un four verrier électrique repose notamment sur le fait que l'énergie thermique nécessaire à la fusion des matières premières est apportée dans la masse du verre en fusion (i.e. dans le bain de matière fondue). Plus précisément, la fusion électrique du verre est basée sur sa propriété de devenir conducteur de l'électricité à partir de 800-900 °C, la conductivité augmentant avec la température. Le verre est donc chauffé par effet Joule, le bain de matière fondue constituant la résistance. Le courant électrique nécessaire à l'obtention de cet effet Joule est quant à lui fourni par des électrodes noyées dans ce bain.

La matière ainsi fondue est classiquement évacuée de la cuve via une ouverture pratiquée en partie basse de la paroi latérale de la cuve. Cette ouverture latérale est généralement (mais non obligatoirement) prolongée par une gorge permettant l'écoulement de la matière fondue vers d'autres zones. Il peut s'agir de zones dans lesquelles sont mises en œuvre des étapes d'affinage, d'homogénéisation, de conditionnement thermique ainsi que de mise en forme finale du verre (cas de la fabrication de verre plat, verre creux, etc.). Alternativement, lorsque le produit destiné à être fabriqué est du verre sous forme de laine minérale (en particulier laine de roche ou laine de verre), la matière fondue peut être directement acheminée, en sortie de gorge et après conditionnement thermique éventuel, vers un poste de fibrage adapté.

En pratique, il est constaté que les matières premières introduites au droit (i.e. à la verticale) de l'ouverture latérale sont celles qui sont évacuées le plus rapidement. Cette évacuation rapide trouve son origine non seulement dans la faible distance séparant la zone d'introduction des matières premières de l'ouverture en question, mais également dans les mouvements de convection de chaleur régnant au sein du bain de matière fondue.

Une telle rapidité d'évacuation s'avère préjudiciable pour ce qui concerne la qualité finale du verre destiné à être fabriqué. En effet, dans la mesure où les matières premières ainsi introduites à la verticale de l'ouverture latérale disposent d'un temps de séjour très court dans le bain de matière fondue, il existe un risque important que leur fusion ne soit pas complète lorsqu'elles quittent la cuve. Or, la présence de résidus infondus (i.e. non complètement fondus) est connue pour altérer la qualité finale du verre (exemples : présence de particule, variation de viscosité, variations d'épaisseur dans le produit fini, etc.) dans le cas de la fabrication de verre plat et verre creux, mais aussi pour boucher les assiettes de fibrage, voire provoquer leur casse, dans le cas de la fabrication de verre sous forme de laine minérale (en particulier laine de roche ou laine de verre).

US5613994 A fait référence à un four électrique. À l'arrière de la cuve il y a un barrage qu'on peut interpréter comme une paroi latérale. Devant cette paroi un retardement ("refractory element") est utilisé. US5613994 A se rapporte aussi à un procédé mis en œuvre au moyen d'un four électrique décrit ainsi.

US3421876 A se rapporte à un four électrique et un procédé comme US5613994 A. US2017158541 A1 décrit un four à verre, dans lequel le verre en fusion traverse un corps poreux.

DE2347819 A1 enseigne un four à verre avec des corps d'écoulement qui ne sont pas mouillés par le verre en fusion et qui sont électriquement conducteurs.

### Exposé de l'invention

La présente invention a pour objectif de remédier à tout ou partie des inconvénients de l'art antérieur, notamment ceux exposés ci-avant, en proposant une solution qui permette de limiter très fortement la présence de résidus infondus provenant de matières premières introduites à proximité de la verticale de l'ouverture formée dans la paroi latérale d'un four verrier électrique comportant une cuve à voute froide ou semi-froide.

A cet effet, et selon un premier aspect, l'invention concerne un four électrique verrier comportant une cuve à voute froide ou semi-froide ainsi que des électrodes pour fondre des matières premières introduites dans la cuve et ainsi obtenir un bain de matière fondue, la cuve comportant une paroi latérale comprenant une ouverture configurée pour permettre l'écoulement de la matière fondue en dehors de ladite cuve. Ledit four comporte en outre des moyens dits « de retardement » immergés au moins en partie dans le bain, positionnés à la verticale de l'ouverture et au voisinage de la paroi latérale de la cuve, ainsi que configurés pour augmenter le temps de séjour dans la cuve des matières premières introduites à proximité desdits moyens de retardement.

Il convient de noter que par « à proximité desdits moyens de retardement », il est fait référence ici non seulement à la zone située au niveau de la surface du bain directement à la verticale de l'ouverture pratiquée dans la paroi latérale, mais également à la zone située au niveau de la surface du bain et qui précède sensiblement lesdits moyens de retardement lorsqu'on s'éloigne horizontalement de ladite paroi latérale.

Ainsi, lesdits moyens de retardement se révèlent particulièrement avantageux en ce qu'ils permettent, du fait de l'augmentation dudit temps de séjour, de limiter très fortement le risque de présence d'infondus provenant de matières premières introduites dans la cuve à proximité de la verticale de l'ouverture dans la paroi latérale.

Dans des modes particuliers de réalisation, lesdits moyens de retardement comportent une plaque comprenant une couche réalisée en matériau réfractaire et agencée au contact ou au voisinage de la paroi latérale de la cuve, ladite plaque s'étendant dans un plan moyen sensiblement horizontal dans lequel elle est maintenue fixe.

Une telle plaque, du fait de son agencement, permet donc non seulement d'éviter que des matières premières viennent directement tomber à la verticale de l'ouverture, mais empêche également, de manière avantageuse, que les matières premières qui atteignent le bain au voisinage de ladite plaque soient entraînées trop rapidement par des mouvements de convection en direction de ladite ouverture.

Dans des modes particuliers de réalisation, la plaque est sensiblement inclinée, depuis la paroi latérale, en direction d'une paroi inférieure de la cuve.

De telles dispositions sont avantageuses en ce qu'elles permettent que les matières premières qui sont introduites à la verticale de l'ouverture ne s'accumulent pas au-dessus de la plaque. L'inclinaison de la plaque par rapport à l'horizontale permet en effet que les matières ainsi introduites glissent vers le bain en s'éloignant de la paroi latérale.

Dans des modes particuliers de réalisation, lesdits moyens de retardement comportent une plaque comprenant une couche réalisée en matériau réfractaire et agencée au contact ou au voisinage de la paroi latérale de la cuve, ladite plaque étant escamotable entre deux positions comportant une première position sensiblement horizontale et une deuxième position sensiblement verticale.

Le fait de considérer une plaque escamotable permet avantageusement de contrôler les instants en lesquels on souhaite effectivement augmenter le temps de séjour dans la cuve des matières premières introduites à proximité de ladite plaque.

Dans des modes particuliers de réalisation, ladite plaque est chauffante, le matériau réfractaire de ladite plaque étant un matériau conducteur, par exemple du molybdène ou du platine.

Le fait d'avoir une chauffe de la plaque permet, tout particulièrement lorsque la plaque est en position verticale, d'inverser les courants de convection créés dans le bain et situés localement en regard de la paroi latérale à la verticale de l'ouverture, de sorte à ramener vers le centre du bain les matières premières introduites dans la cuve à proximité de ladite plaque. Il en résulte une augmentation du temps de séjour dans la cuve des matières premières ainsi introduites. Qui plus est, la chauffe de la plaque permet d'augmenter localement la température du verre dans le bain, ce qui participe également à augmenter la qualité de la fusion.

Dans des modes particuliers de réalisation, lesdits moyens de retardement comportent une plaque comprenant une couche réalisée en matériau réfractaire et agencée au contact ou au voisinage de la paroi latérale de la cuve, ladite plaque s'étendant dans un plan moyen sensiblement vertical dans lequel elle est maintenue fixe et étant chauffante, le matériau réfractaire de ladite plaque étant un matériau conducteur, par exemple du molybdène ou du platine.

Dans des modes particuliers de réalisation, la plaque est immergée dans le bain de matière fondue à distance de la surface dudit bain, préférentiellement à une distance inférieure ou égale à 10 centimètres de la surface dudit bain.

Dans des modes particuliers de réalisation, la plaque présente une dimension supérieure ou égale à celle de l'ouverture dans une direction transversale comptée le long de la paroi latérale de la cuve.

D'une manière générale, les dimensions de la plaque ne sont pas limitatives de l'invention. Les inventeurs ont toutefois constaté que d'excellents résultats, en termes d'augmentation du temps de séjour dans la cuve des matières premières introduites, sont obtenus lorsque la plaque présente une dimension supérieure ou égale à celle de l'ouverture dans ladite direction transversale.

Dans des modes particuliers de réalisation, la plaque s'étend, dans ladite direction transversale, de part et d'autre de l'ouverture, par exemple de manière symétrique, plus particulièrement sur une distance inférieure ou égale à 20% de la dimension de ladite ouverture dans ladite direction transversale.

Dans des modes particuliers de réalisation, la plaque s'étend dans ledit plan moyen (i.e. horizontalement ou bien verticalement selon le cas envisagé) sur une distance comprise entre 30 centimètres et 50 centimètres.

Dans des modes particuliers de réalisation, lesdits moyens de retardement comportent au moins une électrode, par exemple deux électrodes, conformée de manière distincte d'une plaque et agencée de manière sensiblement verticale ou bien de manière sensiblement horizontale, ladite au moins une électrode étant distincte des électrodes configurées pour fondre les matières premières introduites dans la cuve.

Le fait d'utiliser une telle au moins une électrode permet d'inverser les courants de convection créés dans le bain et situés localement en regard de la paroi latérale à la verticale de l'ouverture, de sorte à ramener vers le centre du bain les matières premières introduites dans la cuve à proximité desdites électrodes. Il en résulte une augmentation du temps de séjour dans la cuve des matières premières ainsi introduites. Qui plus est, la chauffe de la plaque permet d'augmenter localement la température du verre dans le bain, ce qui participe également à augmenter la qualité de la fusion.

Dans des modes particuliers de réalisation, l'ouverture latérale est créée par un barrage, par exemple un barrage amovible verticalement.

Selon un deuxième aspect, l'invention concerne un procédé de fusion de matières premières mis en œuvre au moyen d'un four électrique verrier selon l'invention.

Selon un troisième aspect, l'invention concerne un procédé de fabrication de verre comportant une étape de fusion de matières premières conformément à un procédé de fusion selon l'invention.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
[Fig. 1] la figure 1 représente schématiquement, dans son environnement, un mode particulier de réalisation d'un four verrier électrique selon l'invention ;
[Fig. 2] la figure 2 représente schématiquement, dans son environnement, un autre mode particulier de réalisation du four verrier électrique selon l'invention ;
[Fig. 3] la figure 3 représente schématiquement, dans son environnement, encore un autre mode particulier de réalisation du four verrier électrique selon l'invention ;
[Fig. 4] la figure 4 représente schématiquement, dans son environnement, encore un autre mode particulier de réalisation du four verrier électrique selon l'invention ;
[Fig. 5] la figure 5 représente schématiquement, dans son environnement, encore un autre mode particulier de réalisation du four verrier électrique selon l'invention ;
[Fig. 6] la figure 6 est un tableau permettant de comparer l'efficacité d'un four conforme à l'invention avec un four traditionnel tel que connu de l'état de la technique.

### Description de modes de réalisation

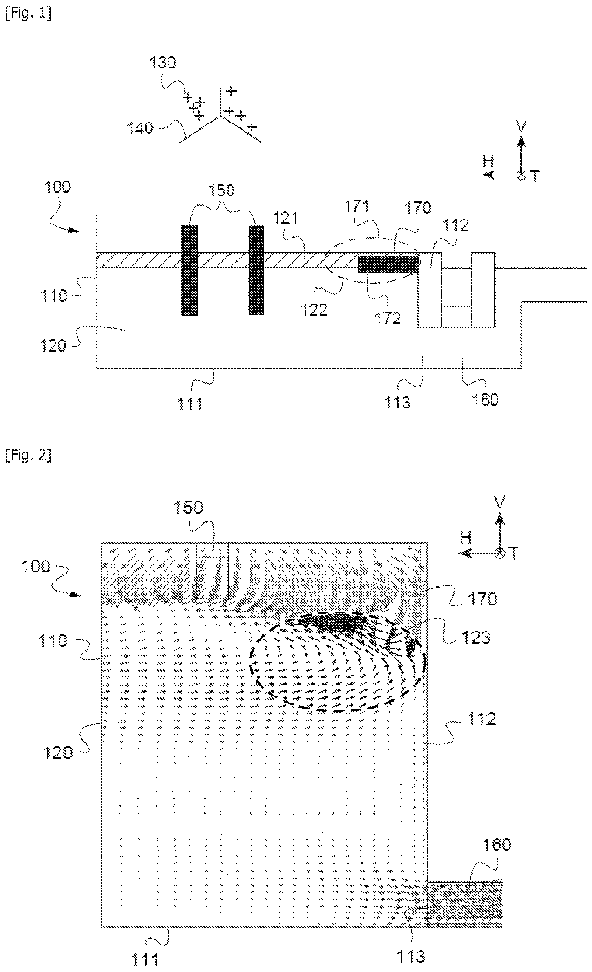

La figure 1 représente schématiquement, dans son environnement, un mode particulier de réalisation d'un four verrier électrique 100 selon l'invention.

Dans la suite de la description, on considère à titre nullement limitatif les orientations horizontale, verticale et transversale en référence au trièdre (H, V, T) représenté sur les figures 1 et 2. Aussi, le four électrique verrier 100 de la figure 1 y est représenté suivant une coupe verticale,

Par convention, les termes « supérieur » et « inférieur » ou « haut » et « bas » ou « dessus » et « dessous » sont utilisés en référence à l'orientation verticale.

Ledit four verrier électrique 100 est configuré pour réaliser la fusion de matières premières dans le but de former un bain de matière fondue vitrifiable. La matière ainsi fondue est destinée à la fabrication de verre, le four électrique verrier 100 étant intégré, à cet effet, à une installation de fabrication de verre comportant, dans des zones autres que celles où est implémentée le four verrier électrique 100, différents dispositifs (non représentés sur les figures) aptes à mettre en œuvre des étapes d'affinage et/ou d'homogénéisation et/ou de conditionnement thermique et/ou de mise en forme finale du verre. De telles étapes sont bien connues de l'homme de l'art, si bien qu'elles ne sont pas décrites plus avant ici.

Pour la suite de la description, on considère de manière nullement limitative que le verre destiné à être fabriqué à partir de la matière fondue dans le four électrique verrier 101 est un produit de type verre d'isolation. Il importe toutefois de noter que le fait de considérer la fabrication d'un tel verre d'isolation ne constitue qu'une variante d'implémentation de l'invention. Aussi, et de manière générale, aucune limitation n'est attachée au type de verre destiné à être fabriqué au moyen de la matière fondue dans le four électrique verrier 100 selon l'invention (exemple : verre plat, verre sous forme de laine minérale, verre sous forme de fils dits textile, etc.).

Il est à noter que la composition des matières premières permettant de fabriquer un produit de type verre d'isolation est également bien connue de l'homme de l'art et donc non décrite en détail ici. Bien entendu, une telle observation s'applique encore pour tous les autres types de verre pouvant être fabriqués selon l'invention.

Dans le mode de réalisation illustré par la figure 1, le four électrique verrier 100 est de forme parallélépipédique, et comporte, de manière conventionnelle, une cuve 110 dans laquelle sont fondues les matières premières de sorte à obtenir le bain 120 de matière fondue.

La cuve 110 présente une paroi inférieure 111 formant la sole du four électrique verrier 100 et s'étendant horizontalement, ainsi qu'une paroi latérale 112 s'élevant verticalement depuis ladite paroi inférieure 111, l'axe transversal T s'étendant le long de ladite paroi latérale 112. La cuve 110 du four électrique verrier 100 est ici une cuve à voûte froide, et est donc surmontée par une voûte (non représentée sur les figures) réalisée dans un matériau connu en soi, par exemple un matériau argileux tel que de la sillimanite.

La cuve 110 (i.e. les parois de la cuve 110) est réalisée en matériau réfractaire, par exemple en Alumine Zircone Silice ou en chrome. La paroi latérale 112 comprend généralement une enveloppe métallique extérieure (encore dite « armature ») en contact avec l'air ambiant. Cette enveloppe métallique peut comprendre deux cloisons entre lesquelles circule un fluide de refroidissement, par exemple de l'eau (paroi dite « water jacket » dans la littérature anglo-saxonne).

Le fait de considérer un four électrique verrier de forme parallélépipédique et comportant une cuve à voûte froide ne constitue bien entendu pas une limitation de l'invention. Ainsi, rien n'exclut de considérer une autre forme, comme par exemple une forme cylindrique à base circulaire, ainsi qu'une cuve à voûte semi-froide.

De manière similaire, rien n'exclut non plus de considérer une paroi inférieure 111 inclinée par rapport à l'horizontale, par exemple sous la forme d'un cône pointant vers le bas ou bien d'un plan incliné, de sorte à favoriser l'entrainement vers le bas de la cuve 110 de matière vitrifiable fondue en début de fusion.

Les matières premières 130 utiles à la fabrication du verre sont introduites dans la cuve 110 via son dessus, au moyen d'un dispositif mécanique 140 apte à réaliser cette introduction sur la surface du bain 120 de matière fondue, plus particulièrement sur toute la surface du bain 120 étant donné que la cuve 110 est ici considérée comme étant à voûte froide. A titre d'exemple nullement limitatif, et tel qu'illustré par la figure 1, ledit dispositif mécanique 140 correspond à une enfourneuse avec tapis rotatif (encore appelé « boom » dans la littérature anglo-saxonne) venant déposer la composition en tout point de la surface du bain.

Les matières premières 130 ainsi introduites et non encore fondues forment une croûte 121 en surface du bain 120 avant de fondre et d'alimenter à proprement parler la matière fondue du bain 120.

La fusion des matières premières 130 introduites dans la cuve 110 est réalisée au moyen d'électrodes 150. En outre, la puissance dissipée autour des électrodes 150 permet de générer des zones de fortes convections dans le bain 120, créant ainsi des courants suffisamment intenses pour apporter les calories nécessaires à la frontière entre la matière déjà fondue et la croûte 121.

Dans le présent mode de réalisation, les électrodes 150 sont agencées en surface de manière à plonger dans le bain 120 de matière fondue, à travers la croûte 121. En outre, les électrodes 150 plongeantes s'étendent verticalement, et sont, dans l'exemple de la figure 1, au nombre de deux ainsi que réalisées en matériau réfractaire (résistant à des températures supérieures à 1000°C), par exemple en molybdène. On note également que lesdites électrodes 150 sont, de manière conventionnelle, réparties au voisinage du centre du bain 120.

Bien entendu, d'autres variantes de réalisation des électrodes sont envisageables, comme par exemple des électrodes plongeantes s'étendant obliquement, c'est-à-dire de manière inclinées par rapport à l'orientation verticale. Par ailleurs, le nombre d'électrodes plongeantes ne constitue pas plus un facteur limitant de l'invention dès lors qu'il est supérieur à deux.

En alternative ou en complément d'électrodes 150 agencées en surface du bain 120 et plongeantes dans celui-ci, il peut également être envisagé d'utiliser des électrodes montantes (par opposition aux électrodes plongeantes) agencées à travers la paroi inférieure 111 de manière à être immergées dans le bain 120. A nouveau, de telles électrodes montantes peut s'étendre verticalement ou bien encore obliquement.

Enfin, éventuellement en complément des variantes précédentes, des électrodes introduites au travers de la paroi verticale 110 peuvent également être envisagées.

La paroi latérale 112 de la cuve 110 comporte une ouverture 113, encore appelée « ouverture latérale 113 » dans la suite de la description. Cette ouverture latérale 113 est configurée pour permettre l'écoulement de la matière fondue du bain 120 en dehors de la cuve 110. Il est à noter que cette ouverture latérale 113 ne couvre pas toute la dimension de la paroi latérale 112 dans la direction transversale T.

Plus particulièrement, et comme illustré par la figure 1, l'ouverture latérale 113 forme une sortie pour la matière fondue qui peut dès lors s'écouler, via un canal d'évacuation 160 formant une gorge, vers d'autres zones dans lesquelles sont typiquement mises en œuvre des étapes d'affinage et/ou d'homogénéisation et/ou de conditionnement thermique et/ou de mise en forme finale du verre.

Dans le présent mode de réalisation, l'ouverture latérale 113 présente une forme rectangulaire, de plus grande dimension (i.e. longueur) selon la direction transversale T. On comprend cependant qu'il ne s'agit que d'une variante particulière de réalisation, et qu'en définitive aucune limitation n'est attachée à la forme de l'ouverture latérale 113.

Par ailleurs, et tel qu'illustré par la figure 1, il est considéré ici que l'ouverture latérale 113 est agencée en partie basse de la paroi latérale 112, au niveau de la paroi inférieure 111. Cela étant, il reste possible d'envisager d'autres variantes dans lesquelles l'ouverture latérale 113 est agencée à un niveau inférieur à celui de la paroi inférieure 111, ou bien encore en partie supérieure de la paroi latérale 112 (i.e. plus proche de la surface du bain 120 que de la paroi inférieure 111).

Conformément à l'invention, le four électrique verrier 100 comporte également des moyens dits « de retardement » immergés au moins en partie dans le bain 120, positionnés à la verticale de l'ouverture latérale 113 et au voisinage de la paroi latérale 112 de la cuve 110, ainsi que configurés pour augmenter le temps de séjour dans la cuve 110 des matières premières 130 introduites à proximité desdits moyens de retardement.

Il convient de noter que par « à proximité desdits moyens de retardement », il est fait référence ici non seulement à la zone située au niveau de la surface du bain 120 directement à la verticale de l'ouverture latérale 113 (i.e. en suivant la paroi latérale 112 verticalement), mais également à la zone située au niveau de la surface du bain 120 et qui précède sensiblement lesdits moyens de retardement lorsqu'on s'éloigne horizontalement (donc vers la gauche selon la direction horizontale H sur la figure 1) de ladite paroi latérale 112, mais aussi qui s'étend sensiblement de part et d'autre desdits moyens de retardement selon la direction transversale T.

A titre purement illustratif, ces deux zones sont contenues dans l'espace 122 délimité par une frontière en pointillés dans la figure 1, étant entendu que cet espace 122 s'étend à la fois dans la direction horizontale H mais également dans la direction transversale T.

De tels moyens de retardement se révèlent particulièrement avantageux en ce qu'ils permettent, du fait de l'augmentation dudit temps de séjour, de limiter très fortement le risque de présence d'infondus provenant de matières premières 130 introduites dans la cuve 110 à proximité de la verticale de l'ouverture latérale 113.

Il convient par ailleurs de noter que le fait d'augmenter le temps de séjour dans la cuve 110 des matières premières 130 introduites à proximité desdits moyens de retardement permet en définitive d'augmenter le temps minimum de résidence de l'ensemble des matières premières introduites dans ladite cuve 110 (et donc, en définitive, de leur donner plus de temps pour leur fusion).

Dans le mode de réalisation de la figure 1, lesdits moyens de retardement comportent une plaque 170 comprenant une couche réalisée en matériau réfractaire (i.e. résistant à des températures supérieures à 1000°C).

A titre d'exemple nullement limitatif, ledit matériau réfractaire est à base de magnésie et/ou du chrome, ou bien est de type Alumine-Zircone-Silice (électrofondu ou non). Encore une autre catégorie envisageable est celle des matériaux à base de métaux tenant à haute températures (exemple : aciers dits réfractaires comme le molybdène ou le platine) ou refroidis,

Dans le présent mode de réalisation, ladite plaque 170 est agencée au contact de la paroi latérale 112 de la cuve 110, ici suivant sa tranche. Elle présente une forme parallélépipédique, et comporte une face supérieure 171 ainsi qu'une face inférieure 172 opposée à ladite face supérieure 171.

Il importe de noter que la forme de la plaque 170 est ici choisie parallélépipédique dans la mesure où la cuve 110 est elle-même de forme parallélépipédique. On comprend toutefois que pour une autre forme de cuve 110, la forme de la plaque 170 est avantageusement adaptée de sorte que celle-ci soit en contact avec la paroi latérale 112.

Par ailleurs, le fait de considérer la plaque 170 au contact de la paroi latérale 112 ne constitue qu'une variante d'implémentation de l'invention. Rien n'exclut en effet de considérer que la plaque 170 est agencée au voisinage de ladite paroi latérale 112. Par « au voisinage », il est fait référence ici à une distance de l'ordre de 1 à 2 centimètres.

La plaque 170 est en outre immergée partiellement dans le bain 120 de matière fondue et s'étend dans un plan horizontal, dit « plan moyen ». Plus particulièrement, la plaque 170 s'étend perpendiculairement à la paroi latérale 112 de la cuve 110 et la face supérieure 171 (respectivement la face inférieure 172) de la plaque 170 est comprise dans la croûte 121 (respectivement est comprise dans le bain 120). La plaque 170 est en outre maintenue fixe dans ledit plan moyen,

Dans l'exemple de la figure 1, la distance séparant la face inférieure 172 de la plaque 170 de la surface du bain 120 est de l'ordre du centimètre, par exemple égale à 5 cm.

Par ailleurs, et à titre d'exemple nullement limitatif, l'épaisseur de la plaque 170 est sensiblement égale à 150 mm. Rien n'exclut cependant d'envisager d'autres valeurs pour l'épaisseur de la plaque. En outre, et d'une manière plus générale, rien n'exclut d'envisager une épaisseur plus grande ou plus petite que celle de la croûte 121 dès lors que la plaque 170 est au moins partiellement immergée.

Une telle plaque 170, du fait de son agencement, permet donc non seulement d'éviter que des matières premières viennent directement tomber à la verticale de l'ouverture latérale 113, mais empêche également, de manière avantageuse, que les matières premières qui atteignent le bain 120 au voisinage de ladite plaque 170 (voir espace 122 illustré sur la figure 1) soient entraînées trop rapidement par des mouvements de convection en direction de ladite ouverture latérale 113.

D'une manière générale, les dimensions horizontale et transversale de la plaque 170 ne sont pas limitatives de l'invention. Les inventeurs ont toutefois constaté que d'excellents résultats, en termes d'augmentation du temps de séjour dans la cuve 110 des matières premières introduites à proximité de ladite plaque 170, sont obtenus lorsque la plaque 170 présente :
- une dimension supérieure ou égale à celle de l'ouverture latérale 113 dans la direction transversale T, et/ou
- une dimension horizontale (selon la direction H) supérieure à la dimension verticale (selon la direction V) de l'ouverture latérale 113.

A titre d'exemple nullement limitatif, la plaque 170 peut présenter, dans la direction transversale T ou dans la direction horizontale H, des dimensions comprises 800 mm et 1200 mm.

Préférentiellement, la plaque 170 s'étend, dans ladite direction transversale T, de part et d'autre de l'ouverture latérale 113, par exemple de manière symétrique, plus particulièrement sur une distance inférieure ou égale à 20% de la dimension de ladite ouverture latérale 113 dans ladite direction transversale T.

Bien entendu, il est également possible d'envisager que la plaque 170 s'étende, dans ladite direction transversale T, uniquement d'un seul côté de l'ouverture latérale 113.

Par ailleurs, dans le mode de réalisation décrit ici, la plaque 170 s'étend horizontalement (i.e. dans la direction H) dans ledit plan moyen sur une distance comprise entre 30 cm et 50 cm, par exemple égale à 40 cm.

L'homme du métier comprend des dispositions qui précèdent que les dimensions transversale et horizontale de la plaque 170 peuvent être avantageusement adaptées en fonction de celles de l'ouverture latérale 113, les valeurs fournies précédemment ne constituant donc en aucune manière des limitations de l'invention.

Encore bien d'autres modes de réalisation, listés ci-après, sont envisageables pour la plaque 170 telle que décrite jusqu'à présent en référence au mode illustré par la figure 1.

Ainsi, selon un mode de réalisation (non illustré par les figures), la plaque 170 horizontale est immergée dans le bain 120 de matière fondue à distance de la surface dudit bain, préférentiellement à une distance inférieure ou égale à 10 centimètres de la surface dudit bain. Autrement dit, dans ce mode, la plaque 170 est entièrement noyée dans le bain 120.

Selon un mode de réalisation (non illustré par les figures), la plaque 170 horizontale comporte, en plus de la couche réalisée en matériau réfractaire, une couche réalisée en matériau métallique à laquelle est accrochée ladite couche en matériau réfractaire. Selon un exemple encore plus particulier de réalisation, une couche isolante peut être agencée entre lesdites couches réfractaire et métallique.

Selon un mode de réalisation, la plaque 170 horizontale est sensiblement inclinée, depuis la paroi latérale 112, en direction de la paroi inférieure 111. Par exemple, ladite inclinaison est inférieure à 30°, voire inférieure à 15° selon un exemple plus particulier. Qui plus est, dans ce mode de réalisation, le bas de la plaque 170, c'est-à-dire, sa face inférieure 172, reste immergée dans le bain 120, ce qui permet d'éviter que les matières premières 130 introduites circulent du centre du four 100 vers la paroi latérale 112, et passe sous la plaque 170.

De telles dispositions sont avantageuses en ce qu'elles permettent que les matières premières qui sont introduites à la verticale de l'ouverture latérale 113 ne s'accumulent pas au-dessus de la plaque 170. L'inclinaison de la plaque 170 par rapport à l'horizontale permet en effet que les matières ainsi introduites glissent vers le bain 120 en s'éloignant de la paroi latérale 112.

Suivant encore un autre mode de réalisation (non représentés sur les figures), il est également possible d'envisager que la plaque 170 est escamotable entre deux positions comportant :
- une première position horizontale (ou sensiblement horizontale le cas échéant) qui correspond à la position décrite jusqu'à présent pour l'agencement de la plaque 170,
- une deuxième position verticale (ou sensiblement verticale le cas échéant) qui correspond à une position dans laquelle la plaque 170 est adossée contre (ou sensiblement adossée à) la paroi latérale 112.

Le fait de considérer une plaque 170 escamotable suivant de telles dispositions permet avantageusement de contrôler les instants en lesquels on souhaite effectivement augmenter le temps de séjour dans la cuve 110 des matières premières 130 introduites à proximité de ladite plaque 170.

Enfin, il est également possible d'envisager d'autres modes de réalisation dans lesquels ladite plaque 170 est chauffante.

La chauffe de la plaque 170 est par exemple réalisée en choisissant, pour la couche réfractaire de la plaque 170, un matériau conducteur, comme par exemple du molybdène ou du platine, ainsi qu'en reliant celle-ci à une des électrodes 150. Un tel mode de réalisation est avantageusement mise en œuvre lorsque la plaque 170 s'étend (sensiblement) verticalement, mais rien n'exclut bien entendu d'envisager une chauffe lorsque la plaque 170 s'étend (sensiblement) horizontalement. En outre, la plaque 170 chauffante peut être maintenue fixe dans sa position nominale (i.e. verticalement ou bien horizontalement), ou bien encore, suivant certains modes de réalisation, être escamotables entre deux positions respectivement verticale et horizontale.

On note que lorsque la plaque 170 est chauffante et s'étend de manière (sensiblement) verticale, elle peut être plongeante dans le bain 120 en présentant une partie externe s'étendant en dehors dudit bain 120. Cette partie externe est par exemple utilisée pour réaliser la fixation de la plaque 170 à la paroi latérale 112 et réalisée dans un matériau autre que le matériau réfractaire utilisé quant à lui pour la partie complémentaire située sous la surface du bain 120.

Le fait de considérer une chauffe de la plaque 170 lorsqu'elle s'étend (sensiblement) verticalement permet d'inverser les courants de convection créés dans le bain 120 et situés localement en regard de la paroi latérale 112 à la verticale de l'ouverture latérale 113. Une telle inversion des courants de convection est illustrée à titre nullement limitatif dans la figure 2 dans laquelle est représenté, suivant une coupe verticale, le four électrique verrier 100. Dans la figure 2, les courants de convection sont représentés au moyen du champ de vitesses (flèches contenues dans la cuve 110) de la matière fondue du bain 120, et il peut clairement y être observée ladite inversion des courants de convection (zone 123 entourée de pointillés dans la figure 2). L'inversion en question permet donc avantageusement de ramener vers le centre du bain 120 les matières premières introduites dans la cuve 110 à proximité de la plaque 170, évitant ainsi que ces dernières ne soient entraînées trop rapidement au travers du canal d'évacuation 160.

L'invention a été décrite jusqu'à présent en considérant uniquement des modes de réalisation dans lesquels les moyens de retardement comportent ladite seule plaque 170. Toutefois, il est possible d'envisager encore d'autres modes de réalisation.

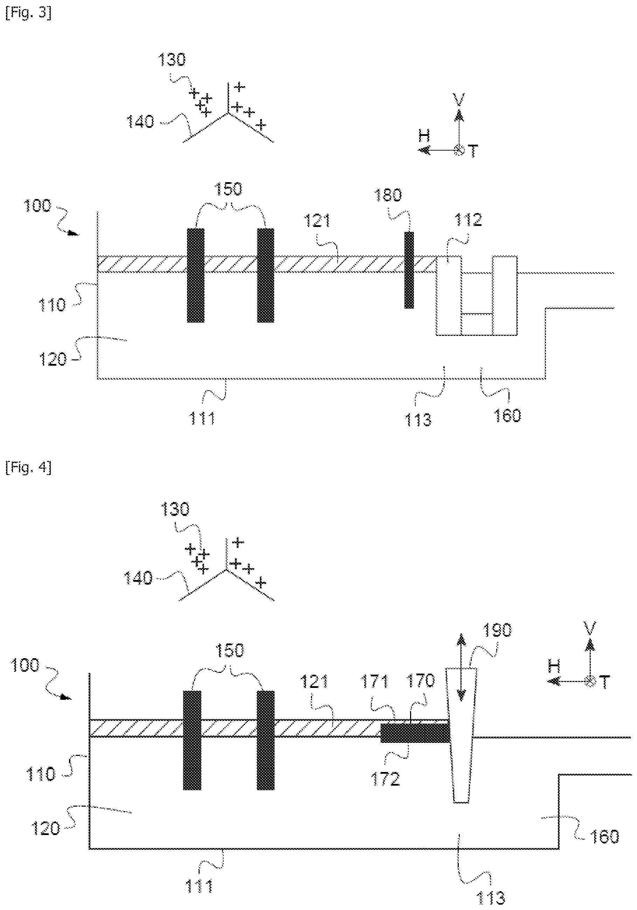

Ainsi, la figure 3 représente schématiquement, dans son environnement, un autre mode particulier de réalisation du four verrier électrique 100 selon l'invention dans lequel les moyens de retardement comportent une électrode 180 agencée de manière sensiblement verticale, plus particulièrement plongeante verticalement dans le bain 120. Ladite électrode plongeante 180 est conformée de manière distincte d'une plaque (et est donc a fortiori distincte de la plaque 170) ainsi que partiellement immergée dans le bain 120, mais rien n'exclut d'envisager qu'elle le soit complètement.

Pour fonctionner, cette électrode plongeante 180 est dans le présent mode de réalisation, reliée à une autre électrode qui correspond à une des électrodes 150 agencées en milieu du bain et utilisées pour réaliser la fonte des matières premières 130.

En outre, bien qu'il soit considéré ici que l'électrode plongeante 180 équipant le four verrier 110 en plus desdites électrodes 150 est agencée de manière (sensiblement) verticale, il reste tout à fait possible d'envisager qu'elle le soit de manière (sensiblement) horizontale, depuis la paroi latérale 112.

Tel qu'illustré par la figure 3, l'électrode 180 diffère des électrodes 150 en ce qu'elle est positionnée à la verticale de l'ouverture latérale 113 et au voisinage de la paroi latérale 112 de la cuve 110. Autrement dit, l'électrode 180 formant, dans le présent de mode de réalisation, lesdits moyens de retardement est placée beaucoup plus proche de la paroi latérale 112 que ne le sont les électrodes 150 conventionnellement utilisées pour réaliser la fusion des matières premières 130.

Le fait d'utiliser une telle électrode 180 produit un effet technique similaire à celui décrit auparavant pour le cas où une plaque verticale chauffante est utilisée. Ainsi, l'électrode 180 permet d'inverser les courants de convection créés dans le bain 120 et situés localement en regard de la paroi latérale 112 à la verticale de l'ouverture latérale 113, de sorte à ramener vers le centre du bain 120 les matières premières introduites dans la cuve 110 à proximité de ladite électrode 180. Il en résulte une augmentation du temps de séjour dans la cuve 110 des matières premières ainsi introduites.

Bien que le mode de la figure 3 ait été décrit en considérant une seule électrode 180, il importe de noter que ce nombre d'électrodes n'est pas limitatif de l'invention. Ainsi, rien n'exclut par exemple de considérer que ladite électrode plongeante 180 est reliée à une autre électrode du même type, auquel cas ledit four verrier électrique 100 comporte, en plus des électrodes 150, deux électrodes plongeantes du même type que celle illustrée sur la figure 1.

La longueur de l'électrode 180 ne représente pas non plus un facteur limitant de l'invention. Ainsi, selon un exemple particulier de réalisation, l'électrode 180 est configurée pour plonger dans le bain 120 jusqu'à une profondeur donnée de la cuve 110, par exemple jusqu'à présenter une extrémité en regard de l'ouverture latérale 113.

Il importe de noter qu'il a été considéré jusqu'à présent, en référence au mode de la figure 3, que les moyens de retardement comportent uniquement ladite électrode 180, la plaque 170 n'étant quant à elle pas présente. Ces dispositions appellent deux remarques :
1) la plaque 170, lorsqu'elle est chauffante comme décrit ci-avant, peut être vue comme une électrode distincte des électrodes 150 agencées en milieu du bain et utilisées pour réaliser la fonte des matières premières 130. Autrement dit, dans ce mode, la plaque 170 chauffante forme en tant que telle une électrode au même titre que l'électrode 180 décrite en référence à la figure 3 ;
2) rien n'exclut d'envisager encore d'autres modes de réalisation dans lesquels la plaque 170, réalisée ou non en matériau réfractaire non conducteur, est combinée à une électrode 180 pour former lesdits moyens de retardement. Par exemple, ladite électrode 180 peut être agencée de manière sensiblement horizontale en passant au travers de ladite plaque 170.

Enfin, indépendamment du mode de réalisation envisagé pour lesdits moyens de retardement, l'invention a également été décrite jusqu'ici en considérant que l'ouverture latérale 113 est une cavité pratiquée dans la matière de la paroi latérale 112. Toutefois, d'autres alternatives sont envisageables, comme par exemple une alternative selon laquelle l'ouverture latérale 113 est créée par (résulte de) un barrage 190, par exemple un barrage amovible verticalement. De manière conventionnelle, la largeur du barrage 190 est adaptée à la largeur de l'ouverture latérale 113, étant entendu que le barrage 190 ne s'étend pas au-delà de ladite ouverture latérale 113. De plus, le barrage 190 est placé au droit de ladite ouverture 113.

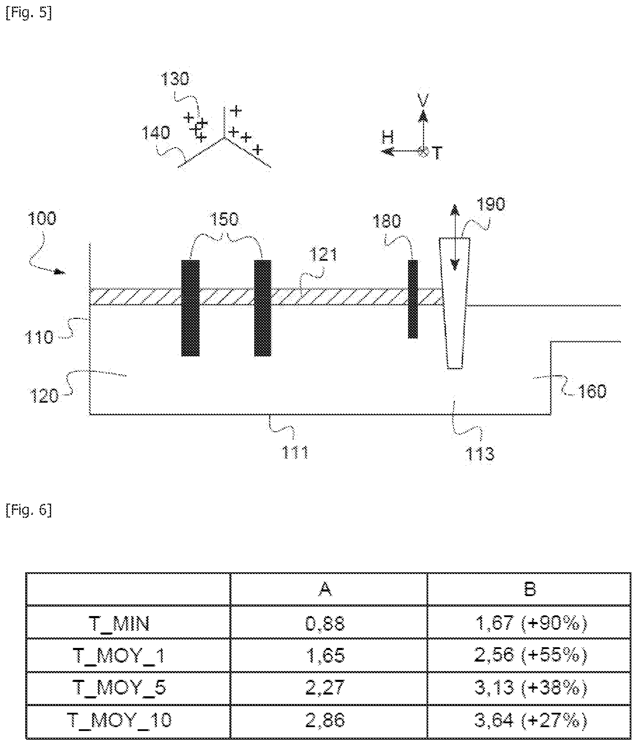

La figure 4 et la figure 5 illustrent schématiquement des modes de réalisation dans lesquels un tel barrage 190 est mis en œuvre, dans les cas où les moyens de retardement comportent respectivement une plaque 170 (analogue de la figure 1) et une électrode 180 (analogue de la figure 3).

Ledit barrage 190 est par exemple réalisé en matériau réfractaire et/ou comporte une enceinte permettant la circulation d'un liquide de refroidissement en son sein (« water jacket » en anglais).

On note que le barrage 190 peut être vu comme faisant partie de la paroi latérale 112 de la cuve 110.

La réalisation d'un tel barrage 190 n'est pas décrite plus en détail ici, le document WO 2013/098504 pouvant être avantageusement consulté à cet effet.

L'invention concerne également un procédé de fusion de matières premières 130 mis en œuvre au moyen du four électrique verrier 100 selon l'invention. Ledit procédé de fusion (non illustré par les figures) comporte une étape d'introduction de matières premières 130 dans la cuve 110 ainsi qu'une étape de fusion des matières premières 130 ainsi introduites. Ledit procédé de fusion peut en outre comporter, dans un exemple plus particulier de mise en œuvre, une étape d'évacuation, par l'ouverture latérale 113, de la matière fondue obtenue à partir de la fusion des matières premières 130.

Enfin, l'invention couvre également un procédé de fabrication de verre (non illustré par les figures) comportant une étape de fusion de matières premières 130 conformément au procédé de fusion selon l'invention. Ledit procédé de fabrication comporte également une étape de mise en forme finale du verre pouvant être précédée, suivant des exemples plus particuliers de mises en œuvre, d'étapes d'affinage et/ou d'homogénéisation et/ou de conditionnement thermique à partir de la matière fondue qui s'écoule en dehors de la cuve 110 au travers de l'ouverture latérale 113 et via le canal d'évacuation 160.

On va maintenant décrire des résultats obtenus pour un exemple particulier de réalisation du four électrique verrier 100, en termes d'augmentation du temps de séjour dans la cuve 110 des matières premières 130 introduites à proximité des moyens de retardement.

Plus particulièrement, pour cet exemple particulier de réalisation, on considère un four électrique verrier 100 de forme parallélépipédique avec une ouverture latérale 113 rectangulaire, ledit four 100 étant destiné à la production de verre d'isolation. Les moyens de retardement sont ici une plaque 170 uniquement, d'épaisseur égale à 150 mm, de largeur (comptée dans la direction transversale T) égale à la largeur de l'ouverture latérale 113 augmentée de 20% et de longueur (comptée dans la direction horizontale H) égale à 70% de la largeur de l'ouverture latérale 113. De plus, la plaque 170 s'étend symétriquement, suivant la direction transversale T, de part et d'autre de l'ouverture latérale 113. Enfin, ladite plaque 170 comporte une couche réalisée en matériau électrofondu de type Alumine-Zircone-Silice.

Les résultats obtenus pour cet exemple de réalisation sont répertoriés dans le tableau illustré par la figure 6. Il s'agit de résultats comparatifs exprimés en heures, et permettant d'apprécier, pour les cas où la plaque 170 est utilisée (référence « B » dans le tableau) ou non (référence « A » dans le tableau) :
- la différence de temps de séjour minimal T_MIN dans la cuve 110,
- la différence de temps de séjour moyen T_MOY_1 des 1% de verre ayant séjourné le moins longtemps dans la cuve 110,
- la différence de temps de séjour moyen T_MOY_5 des 5% de verre ayant séjourné le moins longtemps dans la cuve 110,
- la différence de temps de séjour moyen T_MOY_10 des 10% de verre ayant séjourné le moins longtemps dans la cuve 110.

Il ressort de ces résultats que l'utilisation de la plaque 170 est particulièrement avantageuse au regard du problème technique sous-jacent, puisque le temps de séjour augmente de 90%, 55%, 38% et 27% pour respectivement T_MIN, T_MOY_1, T_MOY_5 et T_MOY_10 lorsque le four électrique verrier 100 est équipé de ladite plaque 170.

## Revendications

1. Four électrique verrier (100) comportant une cuve (110) à voute froide ou semi-froide ainsi que des électrodes (150) pour fondre des matières premières (130) introduites dans la cuve et ainsi obtenir un bain (120) de matière fondue, la cuve comportant une paroi latérale (112) comprenant une ouverture (113) configurée pour permettre l'écoulement de la matière fondue en dehors de ladite cuve, le four étant **caractérisé en ce qu'**il comporte en outre des moyens dits « de retardement » (170, 180) immergés au moins en partie dans le bain, positionnés à la verticale de l'ouverture et au voisinage de la paroi latérale de la cuve, ainsi que configurés pour augmenter le temps de séjour dans la cuve des matières premières introduites dans la zone située au niveau de la surface du bain directement à la verticale de l'ouverture pratiquée dans la paroi latérale, mais également dans la zone située au niveau de la surface du bain et qui précède sensiblement lesdits moyens de retardement lorsqu'on s'éloigne horizontalement de ladite paroi latérale.

2. Four (100) selon la revendication 1, dans lequel lesdits moyens de retardement comportent une plaque (170) comprenant une couche réalisée en matériau réfractaire et agencée au contact ou au voisinage de la paroi latérale (112) de la cuve, ladite plaque s'étendant dans un plan moyen sensiblement horizontal dans lequel elle est maintenue fixe.

3. Four (100) selon la revendication 2, dans lequel la plaque (170) est sensiblement inclinée, depuis la paroi latérale (112), en direction d'une paroi inférieure (111) de la cuve (110).

4. Four (100) selon la revendication 1, dans lequel lesdits moyens de retardement comportent une plaque (170) comprenant une couche réalisée en matériau réfractaire et agencée au contact ou au voisinage de la paroi latérale (112) de la cuve, ladite plaque étant escamotable entre deux positions comportant une première position sensiblement horizontale et une deuxième position sensiblement verticale.

5. Four (100) selon l'une quelconque des revendications 2 à 4, dans lequel ladite plaque est chauffante, le matériau réfractaire de ladite plaque étant par exemple un matériau conducteur, par exemple du chrome ou du platine.

6. Four (100) selon la revendication 1, dans lequel lesdits moyens de retardement comportent une plaque (170) comprenant une couche réalisée en matériau réfractaire et agencée au contact ou au voisinage de la paroi latérale (112) de la cuve, ladite plaque s'étendant dans un plan moyen sensiblement vertical dans lequel elle est maintenue fixe et étant chauffante, le matériau réfractaire de ladite plaque étant un matériau conducteur, par exemple du molybdène ou du platine.

7. Four (100) selon l'une quelconque des revendications 2 à 6, dans lequel la plaque (170) est immergée dans le bain (120) de matière fondue à distance de la surface dudit bain, préférentiellement à une distance inférieure ou égale à 10 centimètres de la surface dudit bain.

8. Four (100) selon l'une quelconque des revendications 2 à 7, dans lequel la plaque (170) présente une dimension supérieure ou égale à celle de l'ouverture (113) dans une direction transversale comptée le long de la paroi latérale (112) de la cuve (110).

9. Four (100) selon la revendication 8, dans lequel la plaque (170) s'étend, dans ladite direction transversale, de part et d'autre de l'ouverture (113), par exemple de manière symétrique, plus particulièrement sur une distance inférieure ou égale à 20% de la dimension de ladite ouverture dans ladite direction transversale.

10. Four (100) selon l'une quelconque des revendications 2 à 9, dans lequel la plaque (170) s'étend dans ledit plan moyen sur une distance comprise entre 30 centimètres et 50 centimètres.

11. Four (100) selon l'une quelconque des revendications 1 à 10, dans lequel lesdits moyens de retardement comportent au moins une électrode (180), par exemple deux électrodes), conformée de manière distincte d'une plaque et agencée de manière sensiblement verticale ou bien de manière sensiblement horizontale, ladite au moins une électrode (180) étant distincte des électrodes (150) configurées pour fondre les matières premières (130) introduites dans la cuve.

12. Four (100) selon l'une quelconque des revendications 1 à 11, dans lequel l'ouverture (113) est créée par un barrage, par exemple un barrage amovible verticalement.

13. Procédé de fusion de matières premières mis en œuvre au moyen d'un four électrique verrier (100) selon l'une quelconque des revendications 1 à 12.

14. Procédé de fabrication de verre comportant une étape de fusion de matières premières conformément à un procédé de fusion selon la revendication 13.

## Patentansprüche

1. Elektrischer Glasofen (100), der einen Tank (110) mit einem kalten oder halbkalten Gewölbe sowie Elektroden (150) zum Schmelzen von Rohmaterialien (130), die in den Tank eingeleitet werden, und zum Erhalten auf diese Weise eines Bades (120) aus geschmolzenem Material aufweist, wobei der Tank eine Seitenwand (112) aufweist, umfassend eine Öffnung (113), die zum Zulassen der Strömung des geschmolzenen Materials aus dem Tank konfiguriert ist, wobei der Ofen
**dadurch gekennzeichnet ist, dass** er ferner sogenannte "Verzögerungsmittel" (170, 180) aufweist, die mindestens teilweise in das Bad eingetaucht sind, die vertikal über der Öffnung und in der Nähe der Seitenwand des Tanks positioniert sind, sowie zum Verlängern der Verweilzeit in dem Tank der Rohmaterialien konfiguriert sind, die in die Zone, die an der Oberfläche des Bades direkt vertikal über der Öffnung gelegen ist, die in der Seitenwand ausgebildet ist, aber auch in die Zone eingeleitet werden, die an der Oberfläche des Bades gelegen ist und die den Verzögerungsmitteln im Wesentlichen vorausgeht, wenn man sich horizontal von der Seitenwand wegbewegt.

2. Ofen (100) nach Anspruch 1, wobei die Verzögerungsmittel eine Platte (170) aufweisen, umfassend eine Schicht, die aus feuerfestem Material gefertigt ist und in Kontakt mit oder in der Nähe der Seitenwand (112) des Tanks angeordnet ist, wobei sich die Platte in einer im Wesentlichen horizontalen Mittelebene erstreckt, in der sie festgehalten wird.

3. Ofen (100) nach Anspruch 2, wobei die Platte (170) im Wesentlichen von der Seitenwand (112) in Richtung einer unteren Wand (111) des Tanks (110) geneigt ist.

4. Ofen (100) nach Anspruch 1, wobei die Verzögerungsmittel eine Platte (170) aufweisen, umfassend eine Schicht, die aus feuerfestem Material gefertigt ist und in Kontakt mit oder in der Nähe der Seitenwand (112) des Tanks angeordnet ist, wobei die Platte zwischen zwei Positionen einziehbar ist, die eine erste im Wesentlichen horizontale Position und eine zweite im Wesentlichen vertikale Position aufweisen.

5. Ofen (100) nach einem der Ansprüche 2 bis 4, wobei die Platte wärmend ist, wobei das feuerfeste Material der Platte zum Beispiel ein leitfähiges Material ist, zum Beispiel Chrom oder Platin.

6. Ofen (100) nach Anspruch 1, wobei die Verzögerungsmittel eine Platte (170) aufweisen, umfassend eine Schicht, die aus feuerfestem Material gefertigt ist und in Kontakt mit oder in der Nähe der Seitenwand (112) des Tanks angeordnet ist, wobei die Platte sich in einer im Wesentlichen vertikalen Mittelebene erstreckt, in der sie festgehalten wird und wärmend ist, wobei das feuerfeste Material der Platte ein leitfähiges Material ist, zum Beispiel Molybdän oder Platin.

7. Ofen (100) nach einem der Ansprüche 2 bis 6, wobei die Platte (170) in das Bad (120) aus geschmolzenem Material in einem Abstand von der Oberfläche des Bades eingetaucht ist, vorzugsweise in einem Abstand von weniger als oder gleich 10 Zentimetern von der Oberfläche des Bades.

8. Ofen (100) nach einem der Ansprüche 2 bis 7, wobei die Platte (170) eine Abmessung vorweist, die größer als oder gleich der der Öffnung (113) in einer Querrichtung ist, gezählt entlang der Seitenwand (112) des Tanks (110).

9. Ofen (100) nach Anspruch 8, wobei sich die Platte (170) in der Querrichtung auf beiden Seiten der Öffnung (113) erstreckt, zum Beispiel symmetrisch, insbesondere über einen Abstand von weniger als oder gleich 20 % der Abmessung der Öffnung in der Querrichtung.

10. Ofen (100) nach einem der Ansprüche 2 bis 9, wobei sich die Platte (170) in der Mittelebene über einen Abstand zwischen 30 Zentimetern und 50 Zentimetern erstreckt.

11. Ofen (100) nach einem der Ansprüche 1 bis 10, wobei die Verzögerungsmittel mindestens eine Elektrode (180), zum Beispiel zwei Elektroden, aufweisen, die separat von einer Platte geformt und im Wesentlichen vertikal oder im Wesentlichen horizontal angeordnet sind, wobei die mindestens eine Elektrode (180) von den Elektroden (150) getrennt ist, die zum Schmelzen der Rohmaterialien (130) konfiguriert sind, die in den Tank eingeleitet werden.

12. Ofen (100) nach einem der Ansprüche 1 bis 11, wobei die Öffnung (113) durch eine Sperre, zum Beispiel eine vertikal entfernbare Sperre, geschaffen wird.

13. Verfahren zum Schmelzen von Rohmaterialien, das mittels eines elektrischen Glasofens (100) nach einem der Ansprüche 1 bis 12 implementiert wird.

14. Verfahren zum Herstellen von Glas, das einen Schritt des Schmelzens von Rohmaterialien gemäß einem Schmelzverfahren nach Anspruch 13 aufweist.

## Claims

1. An electric glass furnace (100) comprising a tank (110) with a cold or semi-cold top and also electrodes (150) for melting raw materials (130) introduced into the tank and thus obtaining a bath (120) of molten material, the tank having a side wall (112) comprising an opening (113) configured to allow the molten material to flow out of the tank, the furnace being **characterized in that** it further comprises so-called "delaying" means (170, 180) which are at least partially immersed in the bath and are positioned in vertical alignment with the opening and in proximity to the side wall of the tank, and are configured to increase the dwell time, in the tank, of the raw materials introduced into the zone located at the surface of the bath directly in vertical alignment with the opening in the side wall, as well as in the zone located at the surface of the bath and which substantially precedes said delaying means when moving horizontally away from said side wall.

2. The furnace (100) according to claim 1, wherein said delaying means comprise a plate (170) comprising a layer made of refractory material and arranged in contact with or in the vicinity of the side wall (112) of the tank, said plate extending in a substantially horizontal middle plane wherein it is kept fixed.

3. The furnace (100) according to claim 2, wherein the plate (170) is substantially inclined, from the side wall (112), towards a bottom wall (111) of the tank (110).

4. The furnace (100) according to claim 1, wherein said delaying means comprise a plate (170) comprising a layer made of refractory material and arranged in contact with or in the vicinity of the side wall (112) of the tank, said plate being retractable between two positions comprising a first substantially horizontal position and a second substantially vertical position.

5. The furnace (100) according to any one of claims 2 to 4, wherein said plate is heating, the refractory material of said plate being for example a conductive material, for example chromium or platinum.

6. The furnace (100) according to claim 1, wherein said delaying means comprise a plate (170) comprising a layer made of refractory material and arranged in contact with or in the vicinity of the side wall (112) of the tank, said plate extending in a substantially vertical middle plane wherein it is kept fixed and being heated, the refractory material of said plate being a conductive material, for example molybdenum or platinum.

7. The furnace (100) according to any one of claims 2 to 6, wherein the plate (170) is immersed in the bath (120) of molten material at a distance from the surface of said bath, preferentially at a distance less than or equal to 10 centimeters from the surface of said bath.

8. The furnace (100) according to any one of claims 2 to 7, wherein the plate (170) has a dimension greater than or equal to that of the opening (113) in a transverse direction measured along the side wall (112) of the tank (110).

9. The furnace (100) according to claim 8, wherein the plate (170) extends, in said transverse direction, on either side of the opening (113), for example symmetrically, more particularly over a distance less than or equal to 20% of the dimension of said opening in said transverse direction.

10. The furnace (100) according to any one of claims 2 to 9, wherein the plate (170) extends in said middle plane over a distance of between 30 centimeters and 50 centimeters.

11. The furnace (100) according to any one of claims 1 to 10, wherein said delaying means comprise at least one electrode (180), for example two electrodes, formed in a distinct manner from a plate and arranged substantially vertically or substantially horizontally, said at least one electrode (180) being distinct from the electrodes (150) configured to melt the raw materials (130) introduced into the tank.

12. The furnace (100) according to any one of claims 1 to 11, wherein the opening (113) is created by a dam, for example a vertically removable dam.

13. A method for melting raw materials implemented by means of an electric glass furnace (100) according to any one of claims 1 to 12.

14. A method for manufacturing glass comprising a step of melting raw materials in accordance with a melting method according to claim 13.
